# EUROPEAN PATENT APPLICATION

(11) **EP 4 137 717 A1**
(43) Date of publication of application: **22.02.2023**
(21) Application number: 22189350.6
(22) Date of filing: 08.08.2022
(51) Int. Cl.: F16D 49/10, F16D 121/16, F16D 125/64

(54) **PLANER / MOULDER DRUM BRAKE**

(30) Priority: 11.08.2021 CA 3127409
(71) Applicant: Norwood Industries, Inc., Oro-Medonte, Ontario L0L 1T0 (CA)
(72) Inventor: CABRIT, Sebastien, Oro-Medonte, L0L 1T0 (CA); DALE, Ashlynne, Oro-Medonte, L0L 1T0 (CA); VANDERHEYDEN, Daniel, Oro-Medonte, L0K 1N0 (CA)
(74) Representative: Millburn, Julie Elizabeth

(57) **Abstract**

A braking system (2) for a rotating member has a lever (30) with an apex (36) where a first arm (34) meets a second arm (32). The apex (36) is rotationally secured to a support (24). A band (20) wraps around a circumference of an end of a rotating member. A first end (22) of the band (20) is secured to the support (24). A second end (28) of the band (20) is secured to the second arm (32). A resilient member (42) is secured to the first arm (34) and the support (24). An actuator (44) is secured to the first arm (34). The resilient member (42) biases the first arm (34), placing the band (20) in frictional engagement with the circumference of the rotating member, and activation of the actuator (44) directs the first arm (34), which relieves the frictional engagement of the band (20) with the circumference of the rotating member. The actuator (44) may be connected to a throttle or a brake control.

## Description

### Field of the Invention

The present invention relates to a braking mechanism that can be applied to the exterior of a rotary drum. In particular, the braking mechanism can be used with a rotary cutter head, such as a molder or planer apparatus.

### Background of the Invention

A molder/planer apparatus can be used to precisely shape and plane lumber or other materials. The apparatus typically includes a rotary axle or spindle that is outfitted with a cutter head having blades or knives that are interchangeable based on the desired shaping. When in use, the cutter head spins at a high rate of speed and carries considerable inertia. When power is cut to the apparatus, the cutter head can continue to spin for a considerable period of time. This can potentially be a safety issue, and can also delay subsequent use of the apparatus.

There is a need for a braking mechanism that arrests the axle and brings the cutter head safely to a stop in a shorter period of time. While various braking mechanisms exist in the art, particularly in conjunction with planers/molders or similar equipment, there is a need for a braking mechanism that is simple, cost effective to manufacture, and straightforward to operate and service.

### Summary of the Invention

According to a first aspect of the present invention, there is provided a braking system for a rotating member comprising a lever having a first arm, a second arm, and an apex positioned where the first arm meets the second arm, the apex of the lever being rotationally secured to a support. The braking system comprises a band that wraps around a portion of a circumference of an end of the rotating member, a first end of the band is secured to the support, and a second end of the band is secured to the second arm of the lever. The braking system comprises a resilient member, a first end of the resilient member is secured to the first arm of the lever, and a second end of the resilient member is secured to the support. The braking system comprises an actuator secured to the first arm of the lever. The resilient member biases the first arm of the lever to place the band in frictional engagement with the circumference of the rotating member, and activation of the actuator directs the first arm of the lever to relieve the frictional engagement of the band with the circumference of the rotating member. The rotating member is an end of a rod, the rod having a cutter head secured thereon.

According to a second aspect of the present invention, there is provided a braking system for a rotating member comprising a lever having a first arm, a second arm, and an apex positioned where the first arm meets the second arm, the apex of the lever being rotationally secured to a support. The braking system comprises a band that wraps around a portion of a circumference of an end of the rotating member, a first end of the band is secured to the support, and a second end of the band is secured to the second arm of the lever. The braking system comprises a resilient member, a first end of the resilient member is secured to the first arm of the lever, and a second end of the resilient member is secured to the support. The braking system comprises an actuator secured to the first arm of the lever. The resilient member biases the first arm of the lever to disengage the band from the circumference of the rotating member, and activation of the actuator directs the first arm of the lever to engage the frictional engagement of the band with the circumference of the rotating member. The rotating member is an end of a rod, the rod having a cutter head secured thereon.

In an embodiment, the lever is located above the rotating member, and when in a resting position, the first arm is substantially horizontal and the second arm points downward.

In an embodiment, the rotating member is a drum secured to the end of the rod.

In an embodiment, an angle between the second arm and the first arm of the lever is between 10° and 90°, preferably between 30° and 85°, and more preferably between 45° and 80°.

In an embodiment, the band wraps around at least 270° of the circumference of the rotating member.

In an embodiment, the resilient member is a spring.

In an embodiment, the band is made of a pliable and/or resilient material.

In an embodiment, the braking system further comprises a cover that substantially encloses the braking system.

In an embodiment, the braking system further comprises a guide that limits the displacement of the band away from the circumference of the rotating member.

In an embodiment, the lever is checkmark shaped.

In an embodiment, the first arm is longer than the second arm.

In an embodiment, the resilient member is secured to the support at a position below the lever.

In an embodiment, the actuator is connected to a throttle and activation of the throttle relieves the frictional engagement of the band.

In an embodiment, release of the throttle causes frictional engagement of the band.

In an embodiment, the actuator is connected to a brake control and release of the brake control relieves the frictional engagement of the band.

In an embodiment, the actuator is connected to a brake control and engaging the brake control engages the frictional engagement of the band.

In an embodiment, the actuation of the brake control causes frictional engagement of the band.

In an embodiment, the resilient member biases the first arm of the lever downward.

In an embodiment, activation of the actuator directs the first arm of the lever upward.

In an aspect, there is provided a braking system for a rotating member comprising a checkmark shaped lever comprises a long arm, a short arm, and an apex, the apex of the lever being rotationally secured to a support. The braking system comprises a band that wraps around a portion of a circumference of an end of the rotating member, a first end of the band is secured to the support, and a second end of the band is secured to the short arm of the lever. The braking system comprises a resilient member, a first end of the resilient member is secured to the long arm of the lever, and a second end of the resilient member is secured to the support at a position below the lever. The braking system comprises an actuator secured to the long arm of the lever. The resilient member biases the long arm of the lever downward, placing the band in frictional engagement with the circumference of the rotating member, and activation of the actuator directs the long arm of the lever upward, which relieves the frictional engagement of the band with the circumference of the rotating member. The rotating member is an end of a rod, the rod having a cutter head secured thereon.

According to another aspect of the present invention, there is provided a moulder/planer apparatus comprising the braking system as defined herein.

### Brief Description of the Drawings

Reference will now be made, by way of example, to the accompanying drawings which show exemplary embodiments of the present application, and in which:
Figure 1 shows a perspective view of an exemplary planer/moulder apparatus, in which a braking apparatus according to the present invention is on the near side under a cover;
Figure 2 shows a perspective view of the planer/moulder apparatus shown in Figure 1, in which the cover has been removed to reveal the braking apparatus;
Figure 3 shows a perspective view of the planer/moulder apparatus shown in Figure 2, in which a portion of the housing of the apparatus has been removed to reveal the cutter head;
Figure 4 shows a perspective view of the planer/moulder apparatus shown in Figure 3, in which the cutter head and the remaining housing has been removed;
Figure 5 shows a front view of the braking apparatus;
Figure 6 shows a front view of the braking apparatus with the cover installed;
Figure 7 shows a rear view of the braking apparatus shown in Figure 6; and
Figure 8 shows an exploded view of the braking apparatus.

### Detailed Description of Exemplary Embodiments

The features and benefits of the present disclosure are illustrated and described herein by reference to exemplary embodiments and is in no way intended to limit the invention, its application, or uses. This description of exemplary embodiments is intended to be read in connection with the accompanying drawings, which are to be considered part of the entire written description. Accordingly, the present disclosure expressly should not be limited to such embodiments, and features of each embodiment described herein may be combined with each other to form further embodiments.

In the description of embodiments disclosed herein, any reference to direction or orientation is merely intended for convenience of description and is not intended in any way to limit the scope of the present invention. Relative terms such as "below", "downward", "upward", and derivatives thereof, or any other terms related to direction or orientation should be construed to refer to the orientation as then described or as shown in the drawing(s) under discussion. These relative terms are for convenience of description only and do not require that the invention be constructed or operated in a particular orientation.

The present invention is a braking system. While the braking system is described with regard to a rotary cutter head, such as would be found in a moulder or a planer apparatus, it is to be understood that the braking system can be utilized in other contexts in which rotational movement is to be curtailed, particularly if the rotating component can be affixed to a drum that would integrate into the braking system as discussed below.

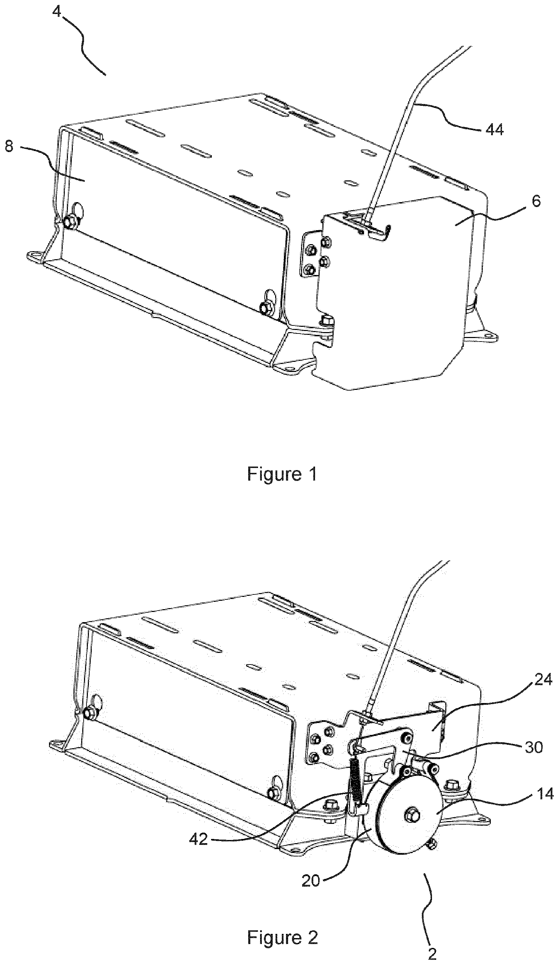

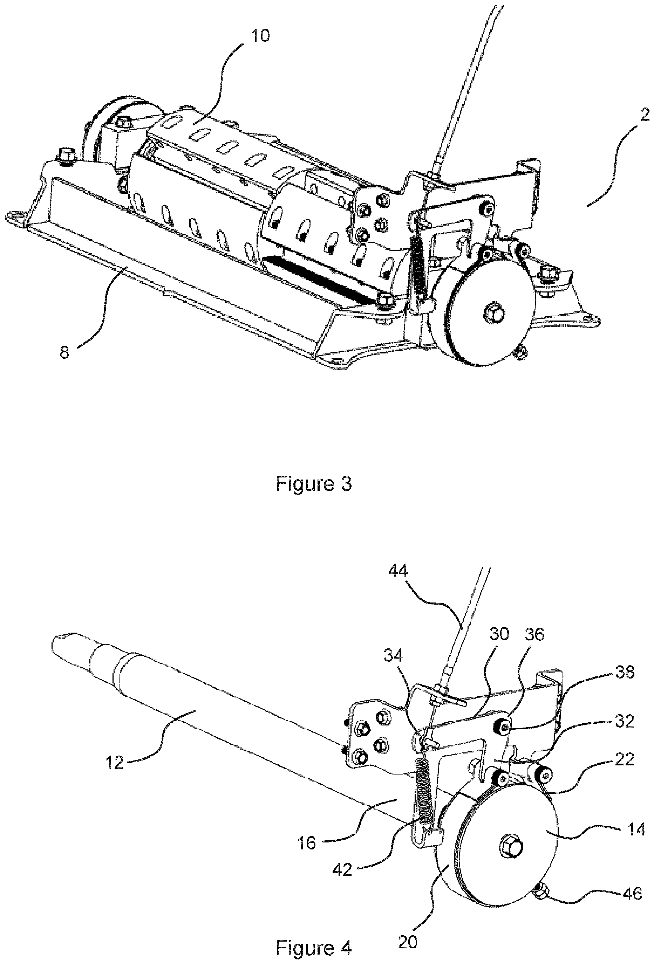

Figure 1 illustrates an exemplary moulder/planer apparatus 4, in which the braking system 2 is attached to the nearest end thereof. In this Figure, the braking system 2 is not fully visible, as it is shielded with a cover 6 that would typically be employed to protect the braking system 2 from e.g. debris that is generated while the apparatus is in use. In Figure 2, the cover 6 has been removed to reveal an exemplary braking system 2, and in Figure 3, a portion of the housing 8 of the apparatus 4 has also been removed to reveal the underlying cutter head 10. Finally, in Figure 4, many of the remaining components of the apparatus 4, including the cutter head 10, have been removed to better illustrate the braking system 2.

In the apparatus 4, the cutter head 10 is generally arranged around a rod or axle 12, which in this embodiment, tapers at opposing ends to form a spindle. A motor (not shown) is operably connected to the rod 12, which when actuated by the user, causes the rod 12 and cutter head 10 to rotate at a high velocity. When the power is cut to the motor, in the absence of a braking system, the rod 12 and cutter head 10 continue to spin until momentum dissipates, bringing the rod 12 and cutter head 10 to a halt.

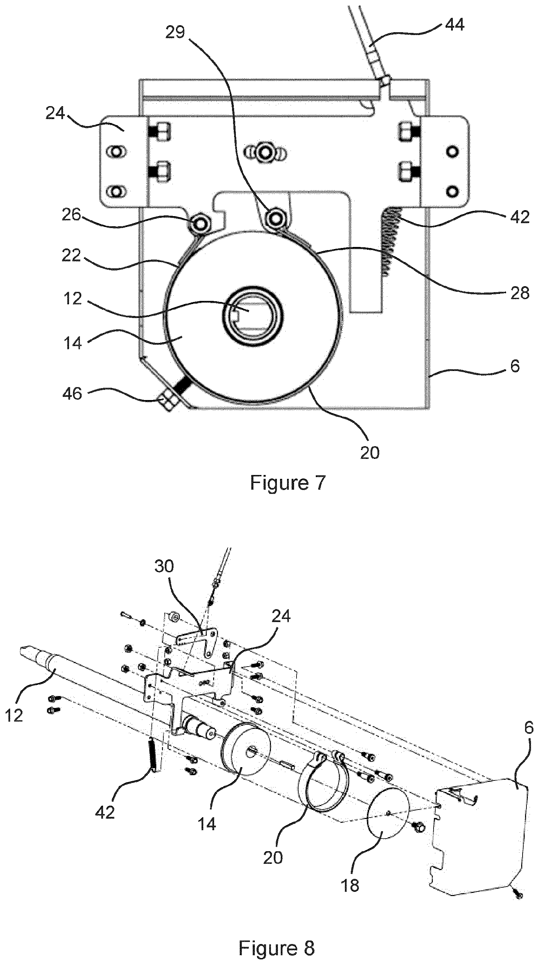

Although the braking system 2 can be applied directly a first end 16 of the rod 12, in this embodiment, as can be seen in Figure 4, the braking system 2 is applied to a drum 14, which is connected to the first end 16 of the rod 12, such as with fastener (e.g. screw, bolt, key, etc.). A drum cap 18 may be included to secure attachment of the drum 14 to the rod 12 (see Figure 8).

In the illustrated embodiment, the braking system 2 includes a band 20 that is shaped and dimensioned to envelop at least a portion of the outer circumference of the drum 14. The band 20 ultimately makes contact with the outer circumference of the drum 14, and it is the friction generated by this contact that slows the drum's rotational movement. While the entire circumference of the drum 14 will typically not be covered by the band, it is preferable that as much of the circumference as possible be covered, as this will increase the surface area between the band 20 and the drum 14, thereby increasing the efficacy of the braking system 2. Preferably, at least 180°, or more preferably at least 270° of the outer circumference of the drum 14 is enveloped by the band 20.

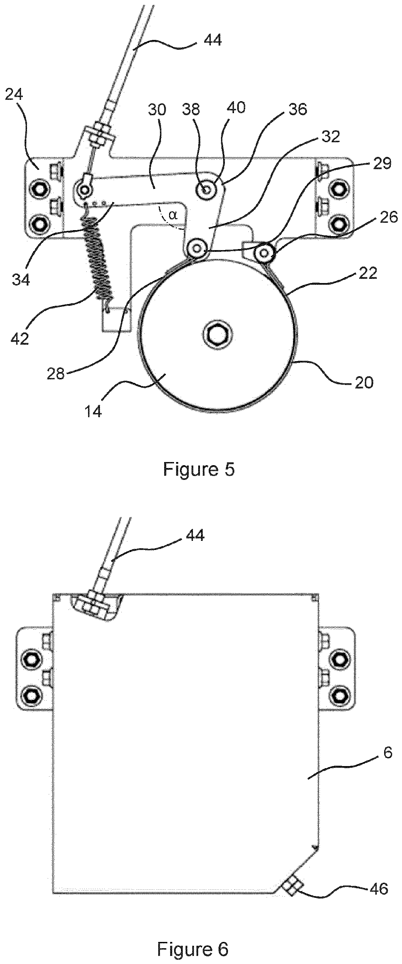

The band 20 is preferably made of a strong yet pliable and resilient material that is capable of flexing and bending, and that can withstand the friction that is generated as it contacts the drum 14. As shown in Figure 5, a first end 22 of the band 20 is anchored to a support 24, such as with a fastener 26 (e.g. a bolt, screw, etc.). In the illustrated exemplary embodiment, the first end 22 of the band 20 wraps around the fastener 26, which ultimately is secured to the support 24, although other mechanisms to secure the first end 22 of the band 20 to the support may be utilized.

The support 24 is effectively a scaffolding that serves as an attachment point for various components of the braking system 2. The support 24 may ultimately be secured to the housing 8 of the apparatus 4, as is shown in Figure 2. Alternatively, the housing 8 of the apparatus 4 may serve as the support 24.

The band 20 then extends around a portion of the circumference of the drum 14, and a second end 28 of the band 20 is anchored to a lever 30 via a second fastener 29. Again, the second end 28 of the band 20 wraps around the fastener 26, which ultimately is secured to the lever 30, although other mechanisms to secure the first end 22 of the band 20 to the lever 30 may be utilized.

A lever 30 is included in the braking system 2, and is secured to the support at its hinge point 38. The lever includes a first arm 34 on one side of the hinge point 38 and a second arm 32 on the opposing side of the hinge point 38. The shape of the lever 30 may be linear (not shown), or make take on an irregular shape as shown in the Figures and discussed below.

In the exemplary embodiment shown in the Figures, the lever 30 is substantially J-shaped or checkmark shaped, but may also be L-shaped or V-shaped. The lever 30 has a short arm 32 and a long arm 34 extending from an apex/fulcrum 36 (See e.g. Figure 5). The angle α between the short arm 32 and the long arm 34 may vary, from 90°, which would produce more of an L-shaped lever 30, to 10°. Preferably the angle α is from 30° to 85°, and more preferably from 45° to 80°.

The second end 28 of the band 20 is attached at or near the free end of the short arm 32 of the lever 30. The apex 36 of the lever is hingedly attached to the support 24 with a fastener 40, such as a bolt or a screw, thereby allowing the lever 30 to rotate about a hinge point 38. A gasket, washer, or similar component 40 can be incorporated into the hinge point 38 to facilitate the rotational movement of the lever 30 about the fastener 26.

A resilient member, such as a spring, it attached at or near the free end of the long arm 34 of the lever 30. The opposing end of the resilient member 42 is anchored to the support 24 at a position below the lever 30. While only one resilient member 42 is shown, a plurality of resilient members 42 can be used to provide additional tension on the lever 30.

The tension provided by the resilient member 42 pulls the free end of the long arm 34 of the lever 30 downward, which causes the lever 30 to rotate about the hinge point 38. With the shape of the lever 30, the lever 30 causes the short arm 32 to move away from the resilient member 42, bringing the second end 28 of the band 20 toward the first end 22 of the band 20. This movement tightens the band 20 around the circumference of the drum 14. The resulting friction generated from the contact between the band 20 and the outer circumference of the drum 14 minimizes or inhibits rotational movement of the drum 14 and the connected cutter head 10. When the apparatus is not in use, the resilient member 42 biases the braking system 2 in this default engaged or braking position.

In an alternative embodiment, the resilient member biases the first arm of the lever to disengage the band from the outer circumference of the rotating member to allow for operation, and activation of the actuator directs the first arm of the lever to engage the frictional engagement of the band with the circumference of the rotating member to brake.

An actuator 44 is also connected at or near the free end of the long arm 34 of the lever 30. The actuator is under the control of the user of the apparatus 4. In this embodiment, it is shown as a cable, although other such mechanisms that can apply a force to the free end of the long arm 34 of the lever 30 may be used. The actuator 44 can ultimately be connected with a throttle or a brake button e.g. on a control panel (not shown). Activation of the throttle (or release of the brake) by the user causes the actuator 44 to pull the free end of the long arm 34 of the lever 30 generally upward against the resistance provided by the resilient member 42. This movement of the long arm 34 causes the lever 30 to rotate about the hinge point 38. This rotational movement of the lever 30 moves the short arm 32 toward the resilient member 42, which brings the second end 28 of the band 20 away from the first end 22 of the band 20. The resulting displacement of the band 20 creates some slack, and may even create a gap between the band 20 and the circumference of the drum 14. This displacement ultimately disrupts the frictional engagement between the band 20 and the circumference of the drum 14, which permits rotational movement of the rod 12 and the cutter head 10. The braking system is now in an unengaged position.

The orientation of the lever 30 may vary, and is generally related to where the actuation of lever is coming from. For example, in the Figures the actuator 44 is located above the braking system 2, and therefore, the lever 30 is substantially horizontal. This allows the actuated lever 30 to pivot sufficiently to relieve the frictional engagement of the band 20 on the drum 14. Alternatively, if the actuator 44 was located at a side of the braking system 2, the lever 30 would be substantially vertical.

To return the braking system 2 to the engaged position, the user has to merely release the throttle (or otherwise engage the braking system), which will stop the upward pull on the free end of the long arm 34 of the lever 30. The tension applied by the resilient member 42 will pull the free end of the long arm 34 of the lever 30 downward, which will cause the band 20 to frictionally engage the circumference of the drum 14 facilitating the end of the rotational movement of the rod 12 and cutter head 10.

Optionally, a guide 46 is included, which serves to limit the amount of displacement of the band 20 from around the drum 14. If too much slack is created in the band 20, or the band 20 is displaced too far from the circumference of the drum 14, this may decrease the effectiveness of the braking system 2. Guide 46 prevents the band 20 from rubbing against the rotating drum brake, thus prevents the band from wear. The guide 46 can be adjustable, such as a screw or threaded bolt as shown in the Figures, which will allow for the amount of allowed displacement of the band 20 to be adjusted as desired.

## Claims

1. A braking system (2) for a rotating member comprising:
a lever (30) comprising a first arm (34), a second arm (32), and an apex (36) positioned where the first arm (34) meets the second arm (32), the apex (36) of the lever (30) being rotationally secured to a support (24);
a band (20) that wraps around a portion of a circumference of an end of the rotating member, a first end (22) of the band (20) is secured to the support (24), and a second end (28) of the band (20) is secured to the second arm (32) of the lever (30);
a resilient member (42), a first end of the resilient member (42) is secured to the first arm (34) of the lever (30), and a second end of the resilient member (42) is secured to the support (24); and
an actuator (44) secured to the first arm (34) of the lever (30);
wherein the resilient member (42) biases the first arm (34) of the lever (30) to place the band (20) in frictional engagement with the circumference of the rotating member, and activation of the actuator (44) directs the first arm (34) of the lever (30) to relieve the frictional engagement of the band (20) with the circumference of the rotating member; and
wherein the rotating member is an end (16) of a rod (12), the rod (12) having a cutter head (10) secured thereto.

2. A braking system (2) for a rotating member comprising:
a lever (30) comprising a first arm (34), a second arm (32), and an apex (36) positioned where the first arm (34) meets the second arm (32), the apex (36) of the lever (30) being rotationally secured to a support (24);
a band (20) that wraps around a portion of a circumference of an end of the rotating member, a first end of the band (20) is secured to the support (24), and a second end of the band (20) is secured to the second arm (32) of the lever (30);
a resilient member (42), a first end of the resilient member (42) is secured to the first arm (34) of the lever (30), and a second end of the resilient member (42) is secured to the support (24); and
an actuator (44) secured to the first arm (34) of the lever (30);
wherein the resilient member (42) biases the first arm (34) of the lever (30) to disengage the band (20) from the circumference of the rotating member, and activation of the actuator (44) directs the first arm (34) of the lever (30) to engage the frictional engagement of the band (20) with the circumference of the rotating member; and
wherein the rotating member is an end (16) of a rod (12), the rod (12) having a cutter head (10) secured thereto.

3. The braking system (2) of claim 1 or 2, wherein the lever (30) is located above the rotating member, and when in a resting position, the first arm (34) is substantially horizontal and the second arm (32) points downward.

4. The braking system (2) according to any one of claims 1 to 3, wherein the rotating member is a drum (14) secured to the end (16) of the rod (12).

5. The braking system (2) according to any one of claims 1 to 4, wherein an angle between the second arm (32) and the first arm (34) of the lever (30) is between 10° and 90°.

6. The braking system (2) according to any one of claims 1 to 5, wherein the band (20) wraps around at least 270° of the circumference of the rotating member and/or wherein the band (20) is made of a pliable and/or resilient material.

7. The braking system (2) according to any one of claims 1 to 6, wherein the resilient member (42) is a spring and/or wherein the resilient member (42) is secured to the support (24) at a position below the lever (30).

8. The braking system according to any one of claims 1 to 7, further comprising a guide (46) that limits the displacement of the band (20) away from the circumference of the rotating member.

9. The braking system (2) according to any one of claims 1 to 8, wherein the lever (30) is checkmark shaped, preferably wherein the first arm (34) is longer than the second arm (32).

10. The braking system (2) according to any one of claims 1 to 9, wherein the actuator (44) is connected to a throttle and activation of the throttle relieves the frictional engagement of the band (20), preferably wherein release of the throttle causes frictional engagement of the band (20).

11. The braking system (2) according to claim 1, wherein the actuator (44) is connected to a brake control and release of the brake control relieves the frictional engagement of the band (20).

12. The braking system (2) according to claim 2, wherein the actuator (44) is connected to a brake control and engaging the brake control engages the frictional engagement of the band (20), preferably wherein the actuation of the brake control causes frictional engagement of the band (20).

13. The braking system (2) according to any one of claims 1 to 12, wherein the resilient member (42) biases the first arm (34) of the lever (30) downward.

14. The braking system according to claim 13, wherein activation of the actuator (44) directs the first arm (34) of the lever (30) upward.

15. A moulder/planer apparatus comprising the braking system (2) according to any one of claims 1 to 14.
